Europäisches Patentamt

European Patent Office

Office européen des brevets

(19)

(11) Numéro de publication : **0 211 758**
**B1**

(12) # FASCICULE DE BREVET EUROPÉEN

(45) Date de publication du fascicule du brevet :
23.11.89

(51) Int. Cl.⁴ : **H 04 L 27/18**, H 04 B 7/17,
H 04 M 11/08

(21) Numéro de dépôt : 86401705.8

(22) Date de dépôt : 30.07.86

(54) Procédé et récepteur de transmission par paquets de signaux numériques sur voie de grande capacité.

(30) Priorité : 30.07.85 FR 8511610

(43) Date de publication de la demande :
25.02.87 Bulletin 87/09

(45) Mention de la délivrance du brevet :
23.11.89 Bulletin 89/47

(84) Etats contractants désignés :
DE GB IT NL

(56) Documents cités :
IEEE INTERNATIONAL CONFERENCE ON COMMUNI-
CATIONS, ICC'84, Amsterdam, NL, 14-17 mai 1984,
vol. 1, pages 1-9, North-Holland, New York, US; H.
MERTENS et al.: "The EBU C-MAC/PACKET system
for direct broadcasting by satellite"
WISSENSCHAFTLICHE BERICHTE AEG-TELEFUN-
KEN, vol. 51, no. 4/5, avril/mai 1979, pages 191-202,
Berlin, DE; J.D. BÜCHS et al.: "Übertragung digitaler
Signale auf Richtfunkstrecken"

(73) Titulaire : ETAT FRANCAIS représenté par le Secrétaire d'Etat aux Postes et Télécommunications et à la
Télédiffusion
(CENTRE NATIONAL D'ETUDES DES TELECOMMUNI-
CATIONS) 38-40 rue du Général Leclerc
F-92131 Issy-les-Moulineaux (FR)

TELEDIFFUSION DE FRANCE
10, rue d'Oradour sur Glane
F-75932 Paris Cédex 15 (FR)

(72) Inventeur : Pommier, Daniel
"Le chant des Alouettes"
Breal-sous-Montfort F-35310 Mordelles (FR)

(74) Mandataire : Fort, Jacques et al
CABINET PLASSERAUD 84, rue d'Amsterdam
F-75009 Paris (FR)

Jouve, 18, rue St-Denis, 75001 Paris, France

## Description

L'invention concerne la transmission plein temps de signaux numériques sur une voie de grande capacité et elle trouve une application particulièrement importante dans la transmission sur les voies présentant les caractéristiques prévues pour la diffusion directe par satellite, à une fréquence de porteuse de 12 GHz autorisant un débit numérique de 20 Mbits par seconde.

Les réseaux terrestres câblés n'offrent par contre qu'une bande passante d'environ 14 MHz, au lieu des 27 MHz d'une voie par satellite, ce qui fait qu'un multiplex temporel plein temps, s'il a des caractéristiques permettant sa transmission sur réseau câblé et autorisant la réception avec un même appareil quelle que soit la voie de transmission, utilise mal la capacité de transmission par satellite.

On sait par ailleurs que la télédiffusion par satellite sera effectuée en Europe en utilisant le système MAC/PAQUETS au standard de 625 lignes. Ce système est basé sur la transmission séquentielle des signaux de luminance et de chrominance, sous forme analogique avec compression temporelle, et d'un multiplex par paquets pour le son et les données. Parmi les variantes du MAC/PAQUETS, celle connue sous la dénomination D2-MAC/PAQUETS utilise, pour les signaux numériques, une modulation de type duo-binaire, avec une bande passante compatible avec celle des réseaux terrestres, alors qu'au contraire la variante dénommée C-MAC/PAQUETS utilise pour les signaux numériques un codage dit MDP 2-4 (également appelé PSK 2-4), à très large bande.

On pourra trouver une description du D2-MAC/PAQUETS dans de document EP-A-169 093 et dans la norme « Spécification du système D2-MAC/Paquet », Septembre 1985 ; et du C-MAC/Paquet dans « The EBU C-MAC/Packet System for Direct Broadcasting by Satellit e » IEEE Int. Conf. On Comm., Amsterdam, 14-17 Mai 1984, Vol. 1, pp. 1-9.

L'invention vise à fournir un procédé de transmission permettant la réception d'un multiplex D2 plein temps en utilisant la pleine capacité d'une voie de transmission par satellite, et ce en n'exigeant que des adjonctions limitées aux récepteurs prévus pour le D2-MAC/PAQUETS et en conservant les avantages du D2-PAQUETS en ce qui concerne la possibilité de transmission sur réseau terrestre.

Dans ce but, l'invention propose notamment un procédé de transmission plein temps de signaux numériques, sous forme d'éléments binaires ou bits successifs, sur voie de diffusion par satellite, caractérisé en ce qu'on transmet simultanément deux multiplex de largeur de bande moitié de celle de la voie sur deux porteuses en quadrature, par modulation de type quatre phases avec symboles décalés sur les deux porteuses et en ce qu'on effectue à la réception une démodulation de fréquence, différentielle de phase, ou cohérente de phase de l'un des multiplex, avec séparation physique d'un élément binaire sur deux.

Chaque multiplex est avantageusement soumis à l'émission à un précodage de transformation de modulation d'état en modulation par transition entre états, afin d'autoriser à la réception l'utilisation d'une démodulation de fréquence ou différentielle et d'éviter l'ambiguïté de phase en cas de démodulation cohérente. Ce précodage peut être indépendant sur chaque porteuse en quadrature ou s'effectuer entre porteuses en quadrature, ce qui apparaît être la meilleure solution lorsque l'on veut pouvoir utiliser une démodulation par discrimination de fréquence ou démodulation différentielle de phase.

L'invention propose également un récepteur permettant de récupérer les signaux d'un des deux multiplex et comportant, en plus des éléments de réception de D2-MAC/PAQUETS, un ensemble spécifique commutable pour substitution avec un démodulateur duo-binaire appartenant au récepteur, ayant un circuit de récupération d'horloge à la fréquence double de celle des éléments binaires de chaque canal et un compteur de sélection d'un élément binaire sur deux, initialisable pour permettre la sélection de celui des multiplex qui est appliqué aux circuits de décodage D2-MAC/PAQUETS.

L'invention sera mieux comprise à la lecture de la description qui suit de modes particuliers d'exécution donnés à titre d'exemples non limitatifs. La description se réfère aux dessins qui l'accompagnent, dans lesquels :

la Figure 1 est un synoptique d'un modulateur d'émission fournissant une porteuse modulée en MDP 2-4 transportant deux multiplex D2-PAQUETS sur deux composantes en quadrature 1 et Q de la porteuse,

la Figure 2 est un synoptique montrant un modulateur constituant une variante de celui de la Figure 1, travaillant en bande latérale résiduelle, désignée par l'abréviation BLR ou VSB,

la Figure 3 est un synoptique de principe montrant l'équipement à démodulation de fréquence à ajouter à un récepteur classique D2-MAC/PAQUETS pour permettre la réception d'un des multiplex transmis en plein temps, cet équipement utilisant la démodulation de fréquence,

les Figures 4 et 5, similaires à la Figure 3, sont également destinées à la réception individuelle et utilisent respectivement la démodulation différentielle et la démodulation cohérente,

la Figure 6, similaire aux Figures 3 à 5, utilise la démodulation cohérente, mais pour la réception communautaire,

la Figure 7 est un diagramme de comparaison des performances pour les trois types de démodulation envisagés plus haut.

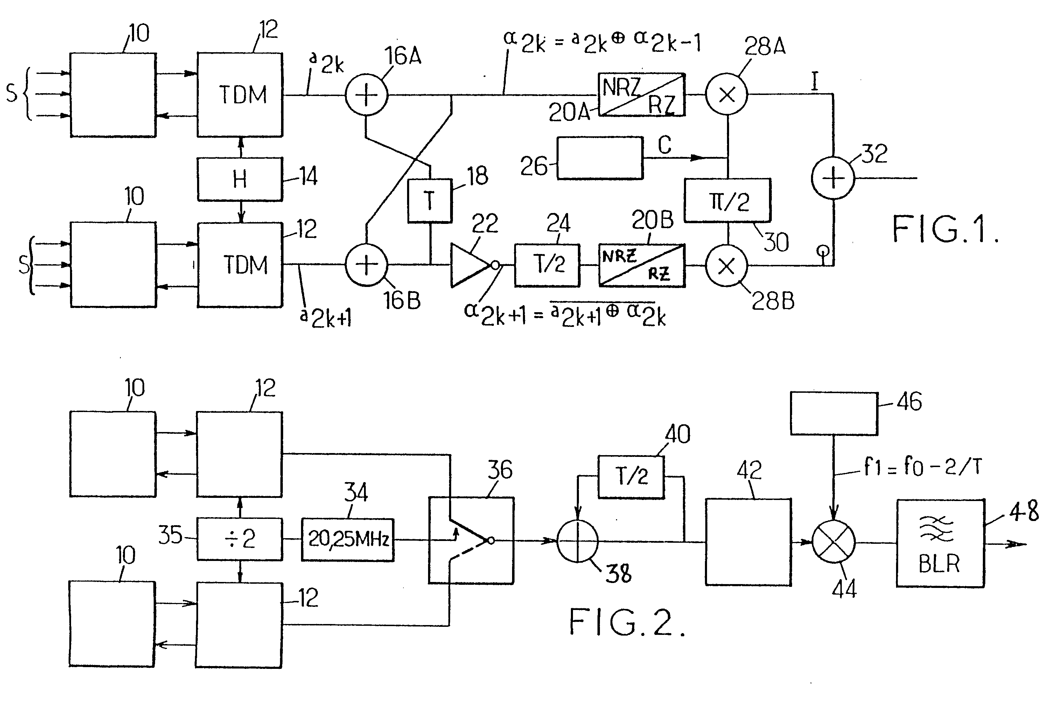

Le modulateur montré en Figure 1 est destiné à être incorporé à un émetteur pour voie de communication par satellite et à fournir une porteuse modulée plein temps en MDP 2-4 transportant deux multiplex D2-PAQUETS séparables à la réception au niveau physique, c'est-à-dire dès les premières couches du protocole standard ISO, par prélèvement d'un élément binaire sur deux. Il convient de garder en mémoire que le terme D2-PAQUETS ne s'applique ici qu'à la constitution des paquets qui seront utilisés pour la modulation de la porteuse, en respectant la répartition des signaux dans un D2-MAC/PAQUETS, dont on trouvera une description dans le document EP-A-169 093 déjà mentionné.

Les deux multiplex sont assemblés de la même façon : les sources S fournissant les messages à transmettre sont reliées à deux circuits classiques 10 de groupement en paquets. Les paquets sont adressés aux multiplexeurs temporels respectifs 12 dont la sortie est commandée par une horloge de modulation commune 14 (à 10,125 MHz dans le cas de transmission sur voie satellite), la durée T affectée à un élément binaire étant alors de $(1/10,125.10)^{-6}$ secondes.

L'un des canaux, que l'on appellera canal A, fournit des éléments binaires pairs $a_{2k}$, tandis que l'autre, que l'on appellera canal B, fournit des éléments binaires impairs $a_{2k+1}$, alternant avec les éléments $a_{2k}$.

La première opération consiste en un pré-codage permettant d'utiliser, à la réception, une démodulation de fréquence ou différentielle. Dans le cas de la Figure 1, ce pré-codage est destiné à transformer la modulation (d'état des éléments a en modulation par transitions entre états de phase. Il est effectué entre les porteuses I et Q, mais un pré-codage indépendant sur chaque porteuse serait possible, à condition d'utiliser une démodulation cohérente, qui exige un matériel plus complexe que la discrimination de fréquence ou la démodulation différentielle de phase.

On supposera dans ce qui suit que ce sont les éléments binaires $a_{2k}$ et $a_{2k+1}$ qui sont fournis simultanément par les multiplexeurs 12. La voie A comporte un additionneur 16A auquel sont appliqués, d'une part, $a_{2k}$, d'autre part, la sortie de l'additionneur 16B du canal B, par l'intermédiaire d'un élément 18 fournissant un retard T.

La sortie $\alpha_{2k}$ de 18A est donc, si on désigne par $\alpha_{2k+1}$ la sortie de 18B au même instant :

$$\alpha_{2k} = a_{2k} \oplus \alpha_{2k-1} \tag{1}$$

L'additionneur 16B reçoit de son côté $a_{2k+1}$ et la sortie $\alpha_{2k}$ de sorte que l'on a :

$$a_{2k+1} = a_{2k+1} \oplus \alpha_{2k} \tag{2}$$

L'additionneur 16A attaque directement un convertisseur non retour à zéro/retour à zéro symétrique 20A qui peut être de l'un quelconque des types connus. L'additionneur 16B attaque de son côté un convertisseur NRZ/RZ symétrique 20B, mais par l'intermédiaire d'un inverseur 22 et d'un élément 24 fournissant un retard T/2, de façon à fournir un décalage tel que les symboles seront appliqués en alternance à la porteuse.

La modulation proprement dite s'effectue de façon classique : la porteuse C à 10,125 MHz, fournie par un oscillateur 26, est appliquée directement au modulateur 28A du canal A, par l'intermédiaire d'un déphaseur 30 (provoquant un décalage de phase égal à $\pi/2$), au modulateur 28B du canal B. Enfin, les deux composantes modulées I et Q de la porteuse sont combinées dans un additionneur 32 qui est relié au circuit d'émission classique (non représenté).

On voit que les circuits fournissent les transitions d'état de phase $\Delta\varphi$ à partir des états des éléments binaires a suivant la table :

| $\alpha_{2k}$ | $\alpha_{2k-1}$ | $\Delta\varphi$ |
|---|---|---|
| O | 1 | $+\pi/2$ |
| O | O | $-\pi/2$ |
| 1 | 1 | $-\pi/2$ |
| 1 | O | $+\pi/2$ |

| $a_{2k+1}$ | $\alpha_{2k}$ | $\Delta\varphi$ |
|---|---|---|
| O | 1 | $-\pi/2$ |
| O | O | $+\pi/2$ |
| 1 | 1 | $+\pi/2$ |
| 1 | O | $-\pi/2$ |

qui peut s'écrire :

$$[2(\alpha_{2k} + \alpha_{2k-1}) - 1]\pi/2 = (2 \cdot a_{2k-1})\pi/2 \text{ (sauts pairs)} \tag{3}$$

$$[2(\alpha_{2k+1} + \alpha_{2k}) - 1]\pi/2 = (2 \cdot a_{2k+1-1})\pi/2 \text{ (sauts impairs)} \tag{4}$$

La variante de réalisation montrée en Figure 2 réalise la modulation MDP 2-4 par filtrage à bande latérale résiduelle, de façon un peu plus simple que dans le cas de la Figure 1, mais avec une horloge à 20,25 MHz. Sur la Figure 2, où les éléments correspondants à ceux de la Figure 1 sont désignés par le même numéro de référence, les multiplexeurs temporels 12 reçoivent simultanément un signal de base de temps à fréquence moitié de la fréquence de l'horloge 34, par l'intermédiaire d'un diviseur 35. La

fréquence d'horloge est appliquée directement à un commutateur 36 permettant d'envoyer en alternance les éléments binaires provenant d'un canal et de l'autre sur un additionneur 38. Cet additionneur constitue, avec un élément à retard 40 de rebouclage depuis la sortie, le circuit de pré-codage. Le signal provenant de l'additionneur 38 est également appliqué à un circuit 42 de mise en forme et de symétrisation, dont le rôle est similaire à celui des circuits NRZ/RZ de la Figure 1. Enfin, les symboles de sortie du circuit 42 sont appliqués à un modulateur 44 qui reçoit également la sortie d'un générateur 46 à fréquence f1. La porteuse modulée est appliquée à un filtre 48 à bande latérale résiduelle dont la fréquence centrale f0 est liée à f1 par la relation :

$$f1 = f0 - 2/T \tag{5}$$

La largeur de bande du filtre 48 doit être telle que la fréquence f1 soit en majeure partie éliminée.

Le montage de la Figure 2 a une constitution apparentée à celle du modulateur décrit dans le document FR-A-2 428 345 auquel on pourra se reporter.

On décrira maintenant divers récepteurs utilisables, d'abord pour la réception individuelle. Dans tous les cas, le récepteur comportera des éléments prévus dans les récepteurs D2MAC-PAQUETS et un ensemble spécifique. Cet ensemble, destiné à la démodulation du signal, pourra utiliser l'une ou l'autre de plusieurs approches et le choix sera fait suivantes performances recherchées et le prix estimé acceptable.

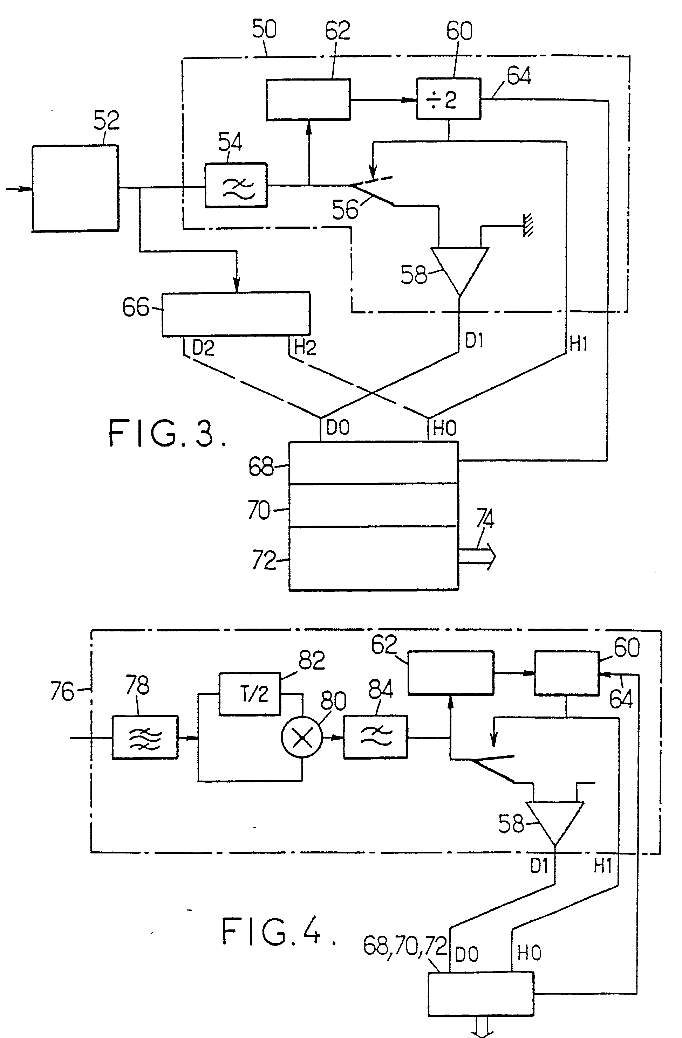

La Figure 3 montre un récepteur dont l'ensemble spécifique 50 est prévu pour recevoir les signaux provenant d'un démodulateur de fréquence 52 qui peut être d'un type quelconque classique.

L'ensemble spécifique 50 comprend un filtre passe-bas 54. Ce filtre d'entrée 54 est appliqué à un commutateur 56 de sélection de multiplex, destiné à appliquer un élément binaire sur deux à un comparateur amplificateur 58, de façon à assurer la séparation physique des multiplex. Le commutateur 56 est fermé à la fréquence d'apparition des symboles appartenant à l'un des deux multiplex, élaborée par un circuit 62 de récupération d'horloge et un diviseur par deux 60. Ce diviseur est initialisable à l'aide d'une entrée 64 pour permettre la sélection d'un multiplex ou de l'autre.

On obtient ainsi, à la sortie de l'ensemble spécifique 50, un signal de données D1 et un signal d'horloge H1 à 10,125 MHz. L'équipement spécifique est complété par un commutateur non représenté permettant d'appliquer soit D1 et H1, soit les sorties D2 et H2 d'un démodulateur duobinaire D2MAC-PAQUETS classique 66 aux entrées DO et HO d'un ensemble appartenant aux circuits normaux d'un récepteur D2MAC-PAQUETS. Ce dernier ensemble peut être regardé comme comprenant les circuits 68 de synchronisation, de débrassage et d'identification de la ligne 625 de la trame, les circuits 70 de synchronisation des paquets et de démultiplexage des paquets, et les circuits 72 de décodage du son et des données, fournissant la sortie restituée 74. Un commutateur manuel non représenté prévu sur les circuits 68 permet de fournir l'ordre de sélection au diviseur 60.

La Figure 4, où seuls ont été représentés l'ensemble spécifique 76 et les circuits 68, 70, 72, montre une variante de réalisation d'un récepteur individuel, mettant cette fois en œuvre une démodulation différentielle. L'ensemble spécifique 76 comprend un filtre passe-bande d'entrée 78, dont la bande passante est centrée sur la fréquence intermédiaire FI du récepteur. Le démodulateur différentiel comprend un mélangeur 80 qui reçoit la sortie du filtre 78, d'une part directement, d'autre part, par l'intermédiaire d'un élément 82 fournissant un retard T/2. La sortie du mélangeur 80 est appliquée à un filtre passe-bas 84. Le reste de l'ensemble spécifique 76 comporte les mêmes éléments que ceux de la Figure 3, désignés par les mêmes numéros de référence.

On voit que le dispositif de la Figure 4 se différencie essentiellement de celui de la Figure 3 par l'adjonction du démodulateur différentiel à 20,25 Mbits par seconde.

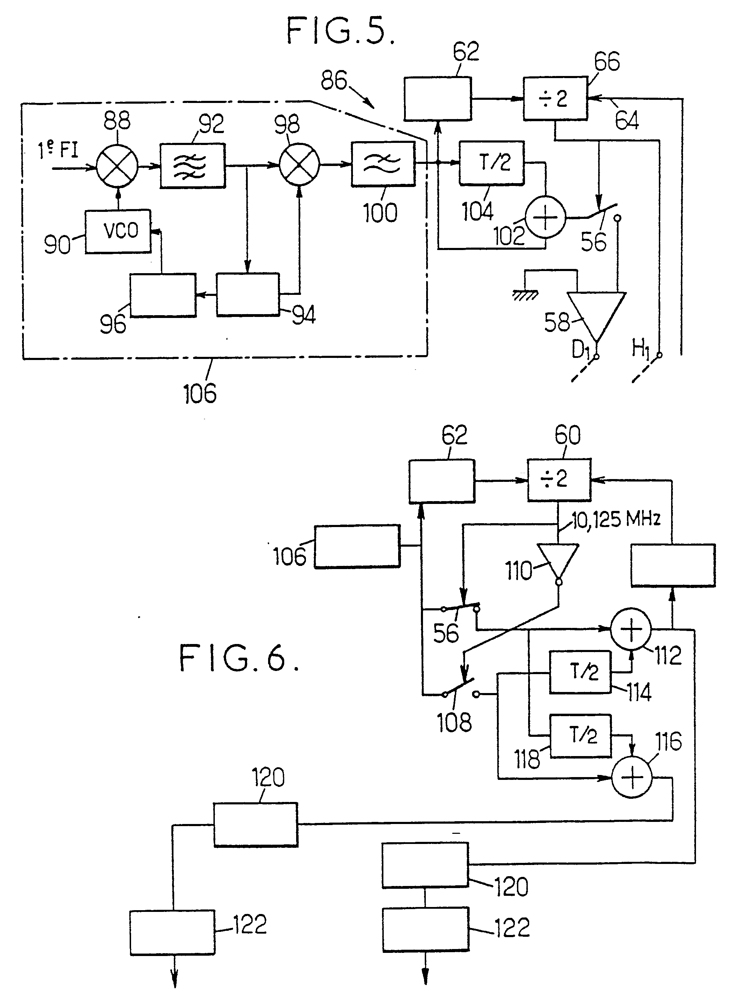

La variante montrée en Figure 5, ou les éléments correspondant à ceux déjà décrits portent encore le même numéro de référence, utilise la démodulation cohérente. Cette solution est celle qui offre les meilleurs performances, mais en contrepartie elle conduit à l'ensemble spécifique 86 le plus complexe.

L'ensemble montré en Figure 5 comprend un mélangeur d'entrée 88 destiné à passer de la première fréquence intermédiaire, fournie par les étages classiques non représentés, et un oscillateur local commandé 90 permettant de passer à la seconde fréquence intermédiaire. Celle-ci est isolée par un filtre de bande 92 centré sur la seconde fréquence intermédiaire. La sortie du filtre 92 est appliquée :

d'une part, à un circuit de récupération de porteuse 94 qui commande l'oscillateur 90 par l'intermédiaire d'un circuit 96 d'aide à l'acquisition,

d'autre part, à un mélangeur 98 qui reçoit également la porteuse récupérée par le circuit 94.

Le signal de sortie du mélangeur 98 est appliqué à un filtre passe-bas 100 de récupération du signal utile. La récupération d'horloge et la sélection du multiplex à recevoir s'effectuent comme dans le cas des Figures 3 et 4. Mais le démodulateur est de type cohérent et comporte un additionneur 102 qui reçoit sur une entrée le signal de sortie provenant directement du filtre 100, d'autre part, le même signal retardé de T/2 par l'élément 104 (ligne à retard par exemple). Le reste du circuit présente la même constitution que sur les Figures 3 et 4.

Quel que soit le mode de réalisation du récepteur qui est adopté, on voit que seul le circuit de récupération d'horloge fonctionne à 20,25 MHz. Toutes les autres fonctions se font à 10,125 Mbits par seconde. On voit que, par simple entrelacement bit à bit des deux multiplex D2-PAQUETS, on conserve les avantages du D2 tout en obtenant la même capacité qu'avec un système C-PAQUETS, simplement en substituant un oscillateur commandé à 20,25 MHz à un oscillateur à 10,125 MHz. Dans tous les cas également, l'ensemble spécifique à ajouter à un récepteur D2 MAC-PAQUETS se limite à une carte peu complexe et à un commutateur permettant de passer de la réception D2 MAC-PAQUETS normale à la réception d'un des multiplex diffusés plein temps sur une voie satellite.

Les trois types de démodulation qui viennent d'être décrits dans le cas d'un récepteur individuel sont également transposables au cas d'un récepteur communautaire. Pour simplifier, seul sera décrit le cas d'un récepteur communautaire à démodulation cohérente, où les organes correspondant à ceux déjà montrés en Figure 5 sont désignés par le même numéro de référence.

Le récepteur communautaire doit être à même de fournir, sur deux sortie différentes, les deux multiplex présents sur la voie de transmission. La partie amont 106 du récepteur montré en Figure 6 peut avoir la même constitution que sur la Figure 5. Mais le démodulateur comprend deux échantillonneurs 56 et 108, respectivement commandés par la sortie du diviseur 60 et par le complément de cette sortie, fourni par un inverseur 110.

La sortie du premier échantillonneur 56 attaque directement l'une des entrées d'un additionneur 112 dont l'autre entrée est reliée à la sortie de l'autre échantillonneur 108 par l'intermédiaire d'un élément de retard 114, fournissant un retard égal à T/2. Un autre additionneur, 116, est monté symétriquement par rapport au premier et reçoit, d'une part, la sortie de l'échantillonneur 108, d'autre part, la sortie de l'échantillonneur 56 retardé de T/2 par un second élément de retard 118. Les additionneurs 112 et 116 attaquent chacun une chaîne d'alimentation de récepteurs individuels comportant chaque fois un codeur duobinaire 120 et un modulateur-amplificateur 122. Chaque chaîne constitue un canal à 7 MHz D2-PAQUETS.

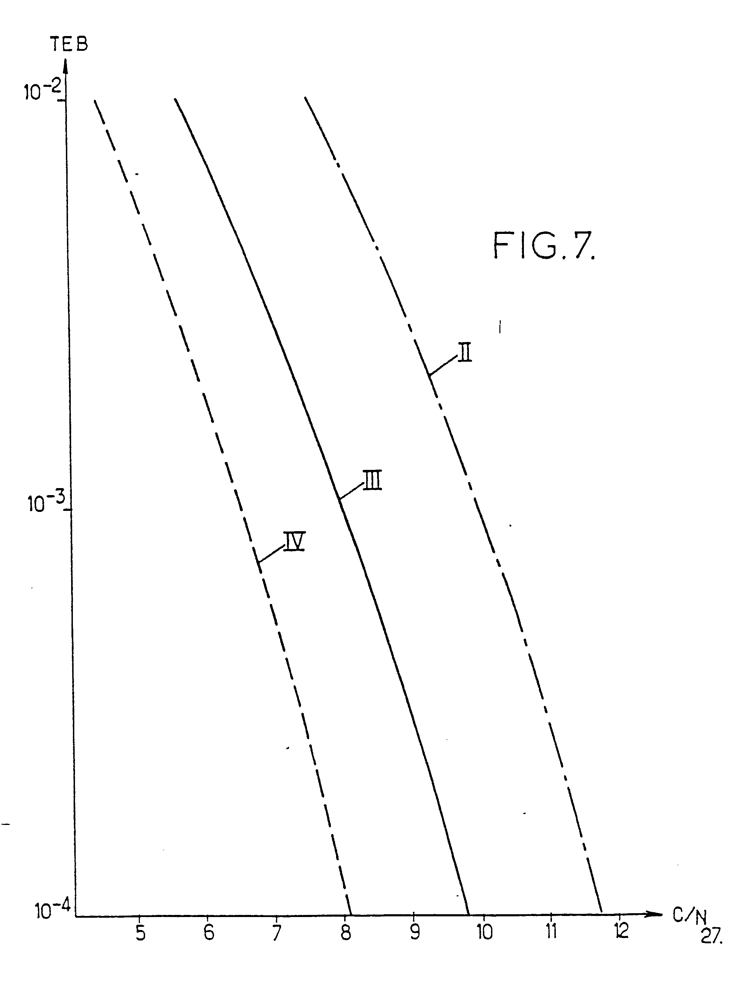

Les démodulateurs montrés en Figures 3 à 5 présentent des performances légèrement différentes qui conduiront à choisir l'un ou l'autre selon le résultat recherché et le prix admissible. La Figure 7 montre la variation de ces performances sous forme du taux d'erreur en fonction du rapport signal à bruit C/N, pour la bande de 27 MHz.

Les courbes II, III et IV correspondent respectivement au cas d'un démodulateur de fréquence à limiteur-discriminateur, d'un démodulateur différentiel et d'un démodulateur cohérent.

## Revendications

1. Procédé de transmission plein temps utilisant le système D2-MAC/PAQUETS de signaux numériques, sous forme d'éléments binaires ou bits successifs, sur voie de diffusion par satellite, caractérisé en ce qu'on transmet simultanément deux multiplex de largeur de bande moitié de celle de la voie sur deux porteuses en quadrature, par modulation de type quatre phases avec symboles décalés sur les deux porteuses et en ce qu'on effectue à la réception une démodulation de fréquence, différentielle de phase, ou cohérente de phase de l'un des multiplex, avec séparation physique d'un élément binaire sur deux.

2. Procédé selon la revendication 1, caractérisé en ce que chaque multiplex est soumis à l'émission à un précodage de transformation de modulation d'état en modulation par transition entre états, afin d'autoriser à la réception l'utilisation d'une démodulation de fréquence ou différentielle et d'éviter l'ambiguïté de phase en cas de démodulation cohérente.

3. Procédé selon la revendication 2, caractérisé en ce que le pré-codage est effectué entre porteuses en quadrature, afin de permettre une démodulation par discrimination de fréquence ou démodulation différentielle de phase.

4. Récepteur de récupération d'au moins un des deux multiplex transmis par le procédé suivant l'une quelconque des revendications 1 à 3, caractérisé en ce qu'il comporte, en plus des éléments de réception de D2-MAC/PAQUETS, un ensemble spécifique (50, 76, 106) commutable pour substitution avec un démodulateur duobinaire appartenant au récepteur, ayant un circuit de récupération d'horloge à la fréquence double de celle des éléments binaires de chaque canal et un compteur de sélection d'un élément binaire sur deux, initialisable pour permettre la sélection de celui des multiplex qui est appliqué aux circuits de décodage D2-MAC/PAQUETS.

5. Récepteur communautaire de récupération des signaux des deux multiplex transmis par un procédé selon l'une quelconque des revendications 1 à 3, caractérisé en ce qu'il comporte, en plus des éléments de réception de D2-MAC/PAQUETS, un ensemble spécifique ayant un circuit (62) de récupération d'horloge à la fréquence double de celle des éléments binaires de chaque canal, un diviseur par deux (60) et deux chaînes destinées à sélectionner chacune un élément sur deux, la sortie de chaque chaîne étant appliquée à une chaîne de décodage D2-MAC/PAQUETS.

6. Récepteur selon la revendication 4 ou 5, caractérisé en ce que l'ensemble spécifique comporte un démodulateur de fréquence, un démodulateur différentiel ou un démodulateur cohérent.

## Claims

1. A method for full time transmission of digital signals, in the form of successive bits, over a satellite broadcasting channel, making use of the D2-MAC/PACKETS system, characterized in that two multiplexes each having a bandwidth half that of the channel are simultaneously transmitted on two quadrature carriers, with four phase type modulation and with symbols mutually offset on the two carriers, and in that, at reception, one of the multiplexes is demodulated by phase demodulation, phase differential demodulation or phase coherent demodulation, with physical separation of one bit out of two.

2. A method according to claim 1, characterized in that each multiplex to be transmitted is subjected to precoding by transformation from condition modulation into modulation by transitions between conditions, whereby frequency or differential demodulation may be used at reception and phase ambiguity is avoided in the case of coherent demodulation.

3. A method according to claim 1, characterized in that the precoding step is carried out between the quadrature carriers whereby demodulation by frequency discrimination or phase difference demodulation is possible.

4. Receiver for recovering one at least of the two multiplexes transmitted by the process according to any one of claims 1-3, characterized in that it comprises, in addition to D2-MAC/PACKETS reception components, a specific unit (50, 76, 106) switchable for substitution with a duobinary demodulator belonging to the receiver, having a clock recovery circuit at a frequency double of that of the bits on each channel and a counter for selecting one bit out of two, resetable to allow selection of that one of the multiplexes which is applied to the D2-MAC/PACKETS decoding circuits.

5. Community receiver for recovering the signals of the two multiplexes transmitted by a process according to any one of claims 1-3, characterized in that it comprises, in addition to D2-MAC/PACKETS reception components, a specific unit having a circuit (62) for recovering a clock at a frequency double of that of the bits on each channel, a divider-by-2 (60) and two branches each for selecting one bit out of two, the output of each branch being applied to a D2-MAC/PACKETS decoding unit.

6. Receiver according to claim 4 or 5, characterized in that the specific unit comprises a frequency demodulator, a differential demodulator or a coherent demodulator.

## Patentansprüche

1. Verfahren zur Übertragung von digitalen Signalen in Form von binären Elementen oder Bitfolgen auf Satelliten-Übertragungswegen unter Verwendung des D2-MAC/Paket-Systems, dadurch gekennzeichnet, daß zwei Multiplexsignale mit jeweils der halben Bandbreite des Übertragungsweges simultan auf zwei in Quadratur stehenden Trägern durch Vierphasen-Modulation übertragen werden, wobei die Zeichen auf den beiden Trägern gegeneinander versetzt sind, und daß beim Empfang eine Frequenzdemodulation, eine differentielle Phasendemodulation oder eine kohärente Phasendemodulation eines der Multiplexsignale durchgeführt und jeweils jedes zweite der binären Elemente physisch abgetrennt wird.

2. Verfahren nach Anspruch 1, dadurch gekennzeichnet, daß jedes Multiplexsignal bei der Aussendung einer Vorkodierung mit Umwandlung der Modulation von Zuständen in eine Modulation von Übergängen zwischen Zuständen unterworfen wird, um beim Empfang die Verwendung einer Frequenzdemodulation oder einer differentiellen Demodulation zu ermöglichen und bei kohärenter Demodulation Phasenzweideutigkeiten zu vermeiden.

3. Verfahren nach Anspruch 2, dadurch gekennzeichnet, daß die Vorkodierung zwischen in Quadratur stehenden Trägern durchgeführt wird, um eine Demodulation durch Frequenzdiskriminierung oder eine differentielle phasendemodulation zu ermöglichen.

4. Empfänger zur Rückgewinnung wenigstens eines der beiden Multiplexsignale, die durch das Verfahren nach einem der Ansprüche 1 bis 3 übertragen werden, dadurch gekennzeichnet, daß zusätzlich zu den Elementen zum Empfang von D2-MAC/Paketen eine spezifische Einheit (50, 76, 106) vorgesehen ist, die im Wechsel gegen einen dem Empfänger angehörenden duobinären Demodulator umschaltbar ist und eine Schaltung zur Rückgewinnung eines Takts aufweist, dessen Frequenz doppelt so groß ist wie diejenige der binären Elemente in jedem Kanal, sowie einen Zähler zur Auswahl jedes zweiten der binären Elemente, der so initialisiert werden kann, daß er die Auswahl desjenigen Multiplexsignals ermöglicht, das den Schaltungen zur Vorkodierung der D2-MAC/Pakete zugeführt wird.

5. Gemeinschaftsempfänger zur Rückgewinnung der Signale der beiden Multiplexsignale, die durch das Verfahren nach einem der Ansprüche 1 bis 3 übertragen werden, dadurch gekennzeichnet, daß zusätzlich zu den Elementen zum Empfang von D2-MAC/Paketen eine spezifische Einheit vorgesehen ist, die eine Schaltung (62) zur Rückgewinnung eines Takts aufweist, dessen Frequenz doppelt so groß ist wie diejenige der binären Elemente in jedem Kanal, ferner einen 1:2-Teiler (60) sowie zwei Schaltungen zur Auswahl jeweils jedes zweiten der binären Elemente, wobei der Ausgang jeder dieser Schaltungen an eine Schaltung zur Dekodierung von D2-MAC/Paketen angeschlossen ist.

6. Empfänger nach Anspruch 4 oder 5, dadurch gekennzeichnet, daß die spezifische Einheit einen Frequenzdemodulator, einen differentiellen Demodulator oder einen kohärenten Demodulator enthält.

FIG.1.

$$\alpha_{2k} = {}^{a}_{2k} \oplus \alpha_{2k-1}$$

$$\alpha_{2k+1} = \overline{{}^{a}_{2k+1} \oplus \alpha_{2k}}$$

FIG.2.

$$f_1 = f_0 - 2/T$$

EP 0 211 758 B1

FIG.3.

FIG.4.

FIG.5.

FIG.6.

FIG.7.